# EUROPÄISCHE PATENTSCHRIFT

(11) **EP 4 108 553 B1**
(45) Veröffentlichungstag und Bekanntmachung des Hinweises auf die Patenterteilung: **20.03.2024**
(21) Anmeldenummer: 21183722.4
(22) Anmeldetag: 05.07.2021
(51) Int. Cl.: B62D 25/14, B60R 11/00, B62D 65/14, B60K 37/00

(54) **INSTRUMENTENTAFELTRÄGER FÜR EIN KRAFTFAHRZEUG UND EINE INSTRUMENTENTAFELTRÄGERANORDNUNG SOWIE EIN VERFAHREN ZU DEREN HERSTELLUNG**
INSTRUMENT PANEL SUPPORT FOR A MOTOR VEHICLE AND INSTRUMENT PANEL SUPPORT ASSEMBLY AND METHOD OF MAKING SAME
SUPPORT DE TABLEAU DE BORD POUR UN VÉHICULE AUTOMOBILE ET AGENCEMENT DE SUPPORT DE TABLEAU DE BORD, AINSI QUE SON PROCÉDÉ DE FABRICATION

(30) Priorität: 21.06.2021 DE 102021116005; 23.06.2021 DE 202021103379 U
(43) Veröffentlichungstag der Anmeldung: 28.12.2022
(73) Patentinhaber: Benteler Automobiltechnik GmbH, 33102 Paderborn (DE); Volkswagen AG, 38440 Wolfsburg (DE)
(72) Erfinder: Tatarinov, Konstantin, 33602 Bielefeld (DE); Werneke, Simon, 33142 Büren (DE)
(74) Vertreter: Ksoll, Peter

(56) Entgegenhaltungen:
- DE-B3-102017 006 470
- FR-A1- 2 911 315
- US-A1- 2015 183 469

## Beschreibung

Die Erfindung betrifft einen Instrumententafelträger für ein Kraftfahrzeug, der einen zwischen den A-Säulen einer Kraftfahrzeugkarosserie eingliederbaren Querträger aufweist und eine Instrumententafelträgeranordnung sowie ein Verfahren zu deren Herstellung.

Instrumententafelträger werden in Kraftfahrzeugen als tragendes Bauteil für diverse Cockpit-Funktionen eingesetzt. Eine der Hauptkomponenten eines Instrumententafelträgers ist der Querträger. Der Querträger ist Teil der Kraftfahrzeugkarosserie und erstreckt sich im Bereich unterhalb der Windschutzscheibe im Wesentlichen horizontal verlaufend quer zwischen den A-Säulen. Der Querträger weist einen fahrerseitigen Längenabschnitt und einen beifahrerseitigen Längenabschnitt auf und ist üblicherweise gegen die Stirnwand, also die Trennwand zwischen Motorraum und Fahrzeuginnenraum, sowie gegen den Fahrzeugboden hin zusätzlich abgestützt.

Der Querträger hat eine versteifende Funktion innerhalb der Kraftfahrzeugkarosserie und dient zur Befestigung und Aussteifung der Instrumententafel. Neben der Halterung für die Instrumententafel selber sind am Querträger diverse Halterungen vorgesehen, an denen unterschiedliche Fahrzeugfunktionskomponenten wie die Längssäule, Heizungs- und Klimaanlage, Mittelkonsole und/oder ein Head-up-Display (HUD) befestigt werden.

Ein Head-up-Display (HUD) ist ein Anzeigesystem bzw. -gerät mit dem Informationen in das Sichtfeld eines Nutzers projiziert werden.

Ein Instrumententafelträger mit einem Querträger, der eine Halterung für die Festlegung eines Head-up-Displays aufweist, ist Gegenstand der vorliegenden Erfindung.

Die DE 10 2005 031 357 B4 offenbart ein Kraftfahrzeug und ein Instrumententafelmodul zur Verwendung in dem Kraftfahrzeug mit einem Querträger. Der Querträger weist eine Befestigungsvorrichtung zur Anbindung eines Head-up-Displays bzw. dessen Projektionsvorrichtung auf.

Ein Verfahren zur Montage eines Head-up-Displays an einen Modulquerträger für ein Armaturenbrett offenbart die DE 10 2017 007 470 B3.

Durch die DE 10 2006 025 386 A1 zählt ein Fahrzeugcockpit mit einem Head-up-Display und einem Querträger zum Stand der Technik, bei dem Befestigungsmittel für eine Vormontage des Head-up-Displays an dem Querträger und für eine Endmontage an einem weiteren tragenden Karosserieteil vorgesehen sind. Die Befestigungsmittel weisen einen Halter zur Aufnahme des Head-up-Displays sowie zur Befestigung desselben an dem Querträger auf.

FR 2 911 315 A1 offenbart einen Instrumententafelträger mit den Merkmalen des Oberbegriffs des Anspruchs 1.

Die Einbaulage und die eindeutige Positionierung des Head-up-Displays im Kraftfahrzeug innerhalb des Armaturenbretts bzw. der Instrumententafelträgeranordnung ist von wesentlicher Bedeutung, um den geforderten Qualitätsmerkmalen, insbesondere den Funktionsmaßen und dem Fugenplan gerecht zu werden. Dementsprechend müssen die Anschraub- bzw. Montageflächen des Head-up-Displays sehr genau sein. Insbesondere müssen die Anschraub- bzw. Montageflächen des Head-up-Displays eine genaue Position in z-Achse im Referenzpunktsystem eines Instrumententafelträgers aufweisen. Weiterhin ist der Kippwinkel des Head-up-Displays um die y-Achse von großer Bedeutung, um den funktionellen Anforderungen gerecht zu werden. Darüber hinaus muss ein Instrumententafelträger und die Instrumententafelträgeranordnung mit einem integrierten Head-up-Display notwendige Sicherheitsbestimmungen, insbesondere auch elektrotechnische Sicherheitsbestimmungen erfüllen.

Der Erfindung liegt ausgehend vom Stand der Technik die Aufgabe zugrunde, einen Instrumententafelträger mit einer funktional und montagetechnisch verbesserten Halterung für ein Head-up-Display am Querträger zu schaffen und eine Instrumententafelträgeranordnung sowie ein Verfahren zu deren Herstellung aufzuzeigen.

Die Lösung dieser Aufgabe besteht nach der Erfindung in einem Instrumententafelträger gemäß Anspruch 1.

Vorteilhafte Ausgestaltungen und Weiterbildungen der Erfindung sind Gegenstand der abhängigen Ansprüche.

Eine Instrumententafelträgeranordnung mit einem erfindungsgemäßen Instrumententafelträger ist Gegenstand von Anspruch 17.

Ein Verfahren zur Herstellung einer Instrumententafelträgeranordnung zeigt Anspruch 18 auf.

Der Instrumententafelquerträger für ein Kraftfahrzeug weist einen zwischen den A-Säulen einer Kraftfahrzeugkarosserie eingliederbaren und an den A-Säulen festlegbaren Querträger auf. Am Querträger ist eine Halterung für ein Head-up-Display (HUD) angeordnet. Erfindungsgemäß weist die Halterung einen Tragkörper für das Head-up-Display auf, wobei der Tragkörper über Stützen am Querträger festgelegt ist. Der Tragkörper besitzt Flanschabschnitte mit Montageöffnungen zur Befestigung des Head-up-Displays. Im Bereich einer Montageöffnung ist ein elektrisch nicht leitendes Koppelglied vorgesehen.

Das elektrisch nicht leitende Koppelglied ist den Montageöffnungen kraft- und/oder formschlüssig zugeordnet. Das bzw. die elektrisch nicht leitenden Koppelglieder sind werkstoffmäßig und konfigurativ dazu ausgelegt und eingerichtet eine galvanische Trennung zwischen einem am bzw. im Tragkörper montierten Head-up-Display und den metallischen Bauteilen des Instrumententafelträgers innerhalb der Instrumententafelträgeranordnung sicherzustellen. Nicht leitend bzw. nicht leitfähig bedeutet, dass die Koppelglieder insbesondere aus einem Nichtleiterwerkstoff bestehen bzw. aus Stoffen bestehen, die an Leitfähigkeit in die Kategorie Nichtleiter einzustufen ist. Wesentlich ist, dass die nichtleitenden Koppelglieder eine galvanische Trennung zwischen Tragkörper und einem montierten Head-up-Display sicherstellen. Das Head-up-Display bzw. das Gehäuse des Head-up-Displays soll nicht Teil der elektrischen Masse der Karosserie sein. Diese Anforderung wird durch die elektrisch nicht leitenden Koppelglieder realisiert, die eine galvanische Trennung zwischen dem Tragkörper und dem Head-up-Display bewirken.

Die Halterung umfasst den Tragkörper für das Head-up-Display der an Stützen festgelegt ist. Insbesondere ist der Tragkörper zwischen zwei seitlichen Stützen geschweißt. Die Stützen ihrerseits sind am Querträger schweißtechnisch stoffschlüssig gefügt. Die Ausgestaltung ermöglicht es die Halterung beim Verschweißen in z-Achse (Fahrzeughochachse) positionsgerecht einzustellen und festzulegen. Auf diese Weise können auch Formabweichungen bzw. Toleranzen des Querträgers in z-Achse kompensiert werden. Ferner kann die Halterung durch Rotation bzw. Verkippen um die y-Achse positionsgerecht eingerichtet und gefügt werden. Insgesamt sind engere Toleranzen erreichbar und zwar mit einem rationellen schweißtechnischen Fügeverfahren der Bauteile von Querträger und Haltung sowie deren Stützen und Tragkörper untereinander.

Der Querträger wird, um seiner Funktion im Instrumententafelträger und innerhalb der Instrumententafelträgeranordnung gerecht zu werden, mit diversen Halterbauteilen bestückt. Hierbei handelt es sich um metallische Halterbauteile, die schweißtechnisch am Querträger festgelegt werden. Durch diese schweißtechnischen Fügevorgänge kommt es zu einem Verzug des Querträgers und der Relativlage von Montagepunkten für die verschiedenen Funktionskomponenten, insbesondere auch der Halterung für das Head-up-Display. Ein solcher Schweißverzug ebenso wie unvermeidliche Toleranzen im Fügeprozess werden bei der Positionierung des Tragkörpers relativ zu den Stützen ausgeglichen. Die Seitenwände des Tragkörpers liegen an den jeweils benachbarten Innenseiten der Stützen an und werden mit den Stützen schweißtechnisch gefügt. Hierbei wird die korrekte Position des Tragkörpers innerhalb der Halterung eingestellt, so dass bei der späteren Montage eines Head-up-Displays keine Justierung der Position des Head-up-Displays während oder nach der Montage erforderlich ist.

Ein bevorzugter Aspekt der Erfindung ist, dass die Halterung und insbesondere deren Tragkörper relativ zu den Stützen positionsgerecht ausgerichtet wird, insbesondere in z-x-Ebene und in dieser Endlage eine stoffschlüssige Fügung zwischen Tragkörper und Stützen erfolgt. Die Stützen weisen Anlageflächen bzw. Fügeflächen an seitlichen Schenkeln auf, welche die Seitenwände des Tragkörpers außenseitig kontaktieren. Der Tragkörper ist mit den Stützen im Bereich der Anlageflächen verschweißt.

Der Tragkörper wird mit den an den Montageflanschen vorgesehen elektrisch nicht leitenden Koppelgliedern im Bereich der Montageöffnung bereitgestellt und mit den Stützten gefügt. Die Stützen selbst sind vorteilhafter Weise vor der Fügung des Tragkörpers am Querträger schweißtechnisch festgelegt.

Eine bevorzugte Ausführungsform sieht vor, dass die Halterung zwischen zwei Stützen gefügt wird. Eine Stütze weist vorzugsweise einen an die Außenkontur des Querträgers konfigurativ angepassten Stützenfuß auf. Der Stützenfuß umgreift den Querträger bereichsweise und ist mit dem Querträger stoffschlüssig gefügt, insbesondere verschweißt.

Eine Stütze ist vorzugsweise im horizontalen Querschnitt, insbesondere im Stützenfuß, u-förmig konfiguriert mit einem Steg und zwei Schenkeln.

Zwei Stützen sind in Längsrichtung (y-Achse) des Querträgers mit axialem Abstand zueinander angeordnet. Die Stege jeder Stütze verlaufen in x-Achse. Die Schenkel der Streben sind vom Steg in Richtung zum Tragkörper gerichtet. Zwischen den Stützen ist der Tragkörper aufgenommen.

Eine Stütze weist Anlageflächen für den Tragkörper auf. Diese sind vorzugsweise an dem Schenkel vorgesehen, insbesondere an den Stirnseiten der Schenkel. Der Tragkörper liegt mit seinen Seitenwänden an den Anlageflächen an und ist stoffschlüssig gefügt.

Eine vorteilhafte Ausgestaltung des erfindungsgemäßen Instrumententafelträgers sieht vor, dass benachbart zumindest einer Montageöffnung ein Positionierelement für das Head-up-Display vorgesehen ist. Ein Positionierelement dient als Montagehilfe und zur Erleichterung des Einbaus und der Ausrichtung des Head-up-Displays in der Halterung und der Instrumententafelträgeranordnung. Ein Positionierelement ist bevorzugt als Durchbrechung bzw. Loch, insbesondere Langloch, benachbart zu einer Montageöffnung ausgestaltet. Vorteilhafterweise ist das Positionierelement an bzw. innerhalb des Bereichs eines elektrisch nicht leitenden Koppelglieds ausgebildet. Eine Positionierhilfe in Form eines Lochs dient zur Aufnahme eines am Head-up-Display vorgesehenen Pins über welchen das Head-up-Display bei der Montage ausgerichtet werden kann.

Am oberen Ende einer Seitenwand ist ein Flanschabschnitt vorgesehen. Die Flanschabschnitte sind von der Seitenwand aus nach außen (y-Achse) gerichtet. Eine für die Praxis besonders vorteilhafte Ausführungsform sieht vor, dass zumindest ein Flanschabschnitt eines Tragkörpers zwei in x-Achse (Fahrzeuglängsachse) mit Abstand zueinander angeordnete Montageöffnungen aufweist. Benachbart zu einer der beiden Montageöffnungen in einem Flanschabschnitt ist ein Positionierelement, insbesondere ein Loch, vorgesehen.

Bevorzugt besteht ein elektrisch nicht leitendes Koppelglied aus Kunststoff. Das Koppelglied kann einen Flanschabschnitt oberseitig und/oder unterseitig zumindest bereichsweise abdecken. Des Weiteren kann das Koppelglied die Montageöffnung innenseitig abdecken. Hierbei ist die innere Umfangswand der Montageöffnung von dem Werkstoff des Koppelglieds abgedeckt bzw. mit dem Werkstoff des Koppelglieds beschichtet.

Eine weitere Ausgestaltung sieht vor, dass in dem Koppelelement ein Schraubverbindungselement integriert ist. Ein Schraubverbindungselement kann aus dem Werkstoff des Koppelelements selbst ausgestaltet sein oder aber durch ein separates Bauteil gebildet werden. Ein Schraubverbindungselement ist insbesondere eine Gewindemutter oder Gewindehülse, in welche eine Montageschraube zur Montage eines Head-up-Displays eingeschraubt werden kann.

Vorzugsweise weist das Koppelglied einen Stutzenkörper auf. Der Stutzenkörper ist insbesondere in Fortsetzung einer Montageöffnung an der Unterseite eines Koppelglieds bzw. der Unterseite eines Flanschabschnitts vorgesehen. Der Stutzenkörper und die Montageöffnung weisen eine gemeinsame Mittelachse auf. Ein in das Koppelglied integriertes Schraubverbindungselement ist insbesondere im Stutzenkörper angeordnet und dient als Widerlager für eine Montageschraube.

Eine in der Praxis besonders vorteilhafte Ausgestaltung sieht vor, dass das Koppelglied in Form eines Clips ausgeführt ist. Ein solcher Koppelglied-Clip ist seitlich auf einen Flanschabschnitt aufgesetzt und umklammert den Bereich einer Montageöffnung ober- und unterseitig. Ein Koppelglied-Clip hält selbsttätig federklemmend an einem Flanschabschnitt. Ein Koppelglied-Clip kann Rastelemente aufweisen, beispielsweise mit Rastnase versehene Federschenkel, welche mit Gegenflächen am Montageflansch zusammendrücken oder aber Durchbrechungen an einem Montageflansch durchgreifen. Im Koppelglied-Clip sind zu einer Montageöffnung kongruente Durchführöffnungen vorgesehen. Gleiches gilt für ein Positionierelement in Form eines Loches. Ein Koppelglied-Clip weist eine Durchbrechung auf die sich mit dem Positionierloch deckt.

Bei einer alternativen Ausführungsform des Koppelglieds ist dieses als Spritzteil ausgeführt. Hierbei ist der Bereich um eine Montageöffnung im Flanschabschnitt mit einem elektrisch nicht leitfähigen Werkstoff, insbesondere Kunststoff, umspritzt. Zu einer Montageöffnung benachbarte Positionierelemente, insbesondere ein Positionierloch, sind ebenfalls umspritzt.

Ein Koppelglied kann als Kunststoffclip mit einem integrierten Gewindeeinsatz oder einer Kunststoff-Umspritzung mit einem Gewindeeinsatz ausgebildet sein. Ein Gewindeeinsatz ist insbesondere eine Schraubmutter, in welche eine Montageschraube zur Montage und Festlegen eines Head-up-Displays eingeschraubt werden kann.

Eine zum Gewindeeinsatz bzw. zur Schraubenmutter passende Montageschraube des bzw. für das Head-up-Display kann elektrisch isolierend beschichtet ausgebildet sein und/oder nur mit dem Head-up-Display elektrisch isoliert in Kontakt stehen.

Die erfindungsgemäße Ausgestaltung ermöglicht, die Halterung beim Fügen zu den Stützen einzustellen, insbesondere in z-Richtung. Auf diese Weise können Formabweichungen des Querträgers, insbesondere in z-Richtung, kompensiert werden. Darüber hinaus kann eine Verkippung um die y-Achse in vorteilhafter Weise kompensiert und die korrekte Lage der Halterung eingestellt werden. Insgesamt gewährleistet die Erfindung, dass engere Toleranzen erreichbar sind, wobei die Fertigung durch einen stoffschlüssigen Standardprozess mittels Schweißen erfolgt. Hierdurch können Taktzeiten erhöht und die Fertigung insgesamt rationeller erfolgen.

Der Tragkörper weist zwei in Längsrichtung (y-Achse) des Querträgers axial mit Abstand angeordnete Seitenwände auf. Die Seitenwände sind in Fahrzeuglängsasche (x-Achse) orientiert und erstrecken sich quer zur Längsrichtung des Querträgers. Zwischen den Seitenwänden erstrecken sich in Längsrichtung des Tragkörpers, also in y-Achse, zwischen den Seitenwänden Längswände, insbesondere eine Rückwand oder Längswandstreben und/oder bodenseitig des Tragkörpers ein Boden oder Bodenabschnitte oder Bodenstreben.

Eine vorteilhafte Ausgestaltung sieht vor, dass der Tragkörper einen Aufnahmeraum bereitstellt, in welchem ein Head-up-Display geschützt aufgenommen werden kann. Der Aufnahmekörper ist durch die Seitenwände und zumindest eine Längswand, insbesondere eine Rückwand, sowie Längswandstreben und/oder Bodenstreben begrenzt. Die Seitenwände sind untereinander biegesteif verbunden. Dies erfolgt über zumindest eine Längswand sowie Längswandstreben und/oder Bodenstreben. Dies ermöglicht eine besonders vorteilhafte Aufnahme und Halterung für ein Head-up-Display. Front- oder rückseitig, insbesondere frontseitig, kann der Tragkörper offen sein. Dies verbessert die Montierbarkeit eines Head-up-Displays und dessen Zugänglichkeit. Der Tragkörper kann vorder- und/oder rückseitige Längswände zwischen den Seitenwänden aufweisen, die eine geringere Höhe haben als die Seitenwände. Insbesondere erstreckt sich zwischen den hinteren Enden der Seitenwände eine Rückwand, die in z-Achse weniger hoch ist als die Seitenwände. Frontseitig ist der wannenförmige Tragkörper im Wesentlichen offen. Entlang des Bodens erstreckt sich zwischen den Seitenwänden eine Längswandstrebe, die am Boden als Umstellung ausgeführt ist.

Eine Stütze ist außenseitig jeweils an einer Seitenwand des Tragkörpers an dieser anliegend stoffschlüssig gefügt. An den Seitenwänden und/oder den Stützen können Positionier- und/oder Fügehilfen beispielsweise in Form von Markern vorgesehen sein. Marker können durch Materialverprägungen, Materialumstellungen, Sicken und/oder auch Durchbrechungen bzw. Löcher gebildet sein.

Ein Fügebereich zwischen den Stützen und den Seitenwänden des Tragkörpers erstreckt sich innerhalb einer z-x-Ebene. Die Anlageflächen, insbesondere an den Schenkeln einer Stütze können einen gemeinsamen Fügebereich bilden. Möglich ist es auch, dass die Anlageflächen und damit die Fügeflächen in der z-x-Ebene versetzt sind. Dies kann beispielsweise durch eine unterschiedliche Schenkellänge erfolgen. Auch können die Schenkel konfigurativ so ausgelegt werden, dass Anlageflächen und damit Fügeflächen in dreidimensional zueinander verschobenen Positionen vorhanden sind.

Der Tragkörper weist einen Boden auf. Vorzugsweise ist der Tragkörper bodenseitig bereichsweise offen ausgeführt. Diese Maßnahme trägt zur Gewichtsreduzierung der Halterung bei. Insbesondere weist der Tragkörper einen Boden auf mit Aufnehmung und/oder Durchzügen und/oder Öffnungen, wobei eine Öffnung einen randseitig umlaufenden Kragen oder randseitige Kragenabschnitte aufweisen kann.

Eine Instrumententafelträgeranordnung weist einen erfindungsgemäßen Instrumententafelträger sowie ein an der Halterung montiertes Head-up-Display auf.

Ein Verfahren zur Herstellung einer solchen Instrumententafelträgeranordnung umfasst die folgenden Schritte:
- Bereitstellen eines metallischen Querträgers, der dazu bestimmt und ausgelegt ist, zwischen den A-Säulen einer Kraftfahrzeugkarosserie eingegliedert zu werden;
- schweißtechnische Fügung einer Mehrzahl von metallischen Halterbauteilen am Querträger, wobei zumindest zwei metallische Stützen am Querträger festgelegt werden, welche dafür ausgelegt und bestimmt sind, mit einem Tragkörper für ein Head-up-Display gekoppelt zu werden;
- Bereitstellen eines Tragkörpers für ein Head-up-Display, welcher zwei mit Abstand zueinander angeordnete Seitenwände aufweist, die untereinander biegesteif verbunden sind;
- Positionieren des Tragkörpers relativ zu den Stützen und Ausrichten des Tragkörpers relativ zu den Stützen in z-x-Ebene;
- Schweißtechnische Fügung des Tragkörpers zwischen den Stützen;
- Bereitstellen und Montage eines Head-up-Displays in der Halterung.

Ein vorteilhafter Aspekt hierbei ist, dass der Tragkörper relativ zu den am Querträger bereits gefügten Stützen in z-Achse (Fahrzeughochachse) und in x-Achse (Fahrzeuglängsachse), also in der z-x-Ebene, positionsgerecht ausgerichtet und dann stoffschlüssig mit den Stützen verschweißt wird. Dies erfolgt mit einer geeigneten Schweißvorrichtung bzw. Schweißlehre. Die Halterung ist nach dem Verschweißen der Komponenten zur Aufnahme des Head-up-Displays bereit. Eine nachträgliche Justierung des Head-up-Displays selbst muss nicht mehr erfolgen.

Eine die Funktionalität eines Instrumententafelträgers verbessernde Ausgestaltung sieht vor, dass der Querträger einen fahrerseitigen Längenabschnitt mit einem Querträgerende aufweist, wobei das Querträgerende eine Montageöffnung besitzt, welche den fahrerseitigen Längenabschnitt bzw. den fahrerseitigen Längenabschnitt im Bereich des Querträgerendes in Fahrzeuglängsachse (x-Achse) durchsetzt. Die Querschnittsgeometrie zusammen mit der Festlegung des Querträgers in Fahrzeuglängsachse (x-Achse) gewährleistet eine vorteilhafte Montage und eine im statischen und dynamischen Belastungsverhalten vorteilhafte Festlegung des Instrumententafelträgers innerhalb einer Kraftfahrzeugkarosserie. Besonders vorteilhaft weist das Querträgerende im vertikalen Querschnitt eine rechteckige Konfiguration auf mit einer in Fahrzeughochachse (z-Achse) gemessenen Höhe, die größer ist als die in Fahrzeuglängsachse (x-Achse) gemessene Breite.

Ausführungsformen der Erfindung und erfindungsgemäße Aspekte sind in den nachfolgenden Zeichnungen dargestellt und beschrieben. Es zeigen:
- Figur 1: eine Ansicht auf einen erfindungsgemäßen Instrumententafelträger;
- Figur 2: den fahrerseitigen Längenabschnitt des Instrumententafelträgers gemäß der Darstellung von Figur 1 ;
- Figur 3: technisch schematisiert und stark vereinfacht eine Seitenansicht auf einen Instrumententafelträger;
- Figur 4: eine erste Ausführungsform einer Halterung für ein Head-up-Display in einer perspektivischen Darstellung;
- Figur 5: die Halterung aus einer anderen Perspektive;
- Figur 6: die Darstellung gemäß der Figur 4 in einer Draufsicht;
- Figur 7: einen Ausschnitt aus der Halterung in einer Perspektive;
- Figur 8: den Ausschnitt entsprechend der Darstellung von Figur 7 in einer Seitenansicht;
- Figur 9: eine zweite Ausführungsform einer Halterung für ein Head-up-Display in einer Perspektive,
- Figur 10: die Halterung gemäß der Darstellung von Figur 9 aus einer anderen Perspektive;
- Figur 11: die Darstellung gemäß der Figur 9 in einer Draufsicht;
- Figur 12: einen Ausschnitt aus der Halterung gemäß der Darstellung der Figuren 9 bis 11 in einer perspektivischen Ansicht;
- Figur 13: eine schematisierte Seitenansicht auf den Ausschnitt entsprechend der Figur 12;
- Figur 14: eine weitere Ausführungsform einer Halterung für ein Head-up-Display in einer Perspektive und
- Figur 15: eine Ansicht auf eine weitere Ausführungsform eines Instrumententafelträgers.

In den Figuren werden für gleiche oder funktionell einander entsprechende Bauteile bzw. Bauteilkomponenten die gleichen Bezugszeichen verwendet. Gleiches gilt für dargestellte Bemaßungen und/oder Abmessungen.

Begriffe wie oben und unten, vorne und hinten, horizontal und vertikal oder Längsrichtung und Querrichtung sowie Oberseite und Unterseite, Fahrerseite, fahrerseitig, Beifahrerseite oder beifahrerseitig beziehen sich auf die Einbaulage des Querträgers zwischen den A-Säulen innerhalb einer Kraftfahrzeugkarosserie oder der Montagelage der Halterung am Querträger und relativ zum Querträger.

Ein Fahrzeugkoordinatensystem ist ein dreidimensionales kartesisches Koordinatensystem, um die Achsen innerhalb eines Kraftfahrzeugs zu kennzeichnen. Der Ursprung des Koordinatensystems liegt in der Fahrzeugmittelebene. Die x-Achse entspricht der Fahrzeuglängsachse, die y-Achse der Fahrzeugquerachse und die z-Achse der Fahrzeughochachse.

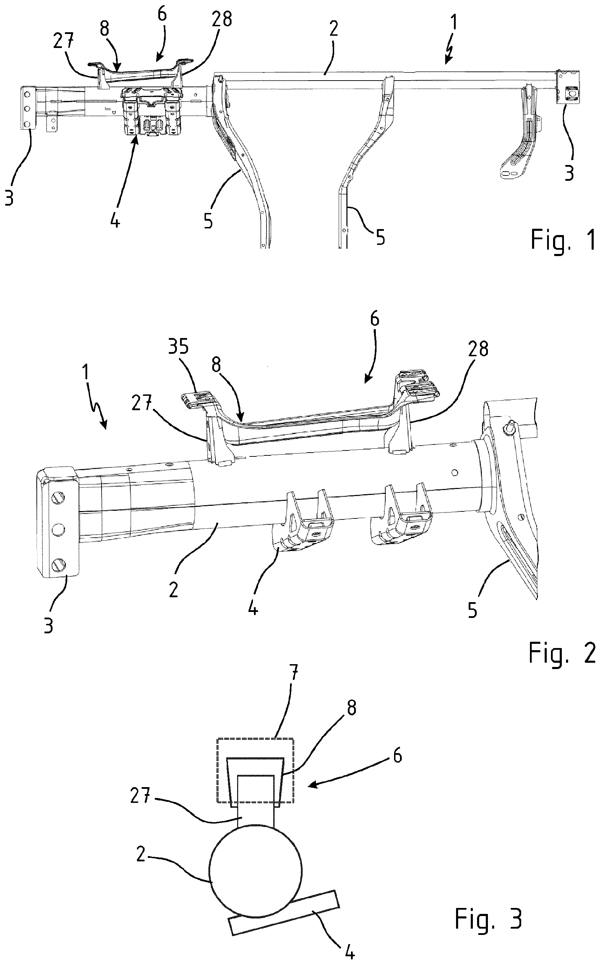

Die Figur 1 zeigt einen Instrumententafelträger 1. Figur 2 zeigt den fahrerseitigen Längenabschnitt des Instrumententafelträgers 1 gemäß der Darstellung von Figur 1 in einer vergrößerten Darstellung.

Figur 3 zeigt eine technisch schematisierte und stark vereinfachte Seitenansicht auf einen Instrumententafelträger 1.

Der Instrumententafelträger 1 weist einen Querträger 2 auf. Der Querträger 2 ist zwischen hier nicht dargestellten A-Säulen einer Kraftfahrzeugkarossiere eingliederbar und erstreckt sich im Wesentlichen horizontal verlaufend in Fahrzeugquerachse (y-Achse) quer zwischen den A-Säulen. Die Festlegung des Querträgers 2 an den A-Säulen erfolgt über endseitig des Querträgers 2 vorgesehene Montagebauteile 3.

Der Querträger 2 besteht aus Stahl. Am Querträger 2 sind diverse Halter für Fahrzeugfunktionskomponenten gefügt. Exemplarisch bezeichnet sind ein Lenkerhalter 4 sowie Stützstreben 5.

Der Querträger 2 weist eine Halterung 6 für ein Head-up-Display 7 (HUD) auf.

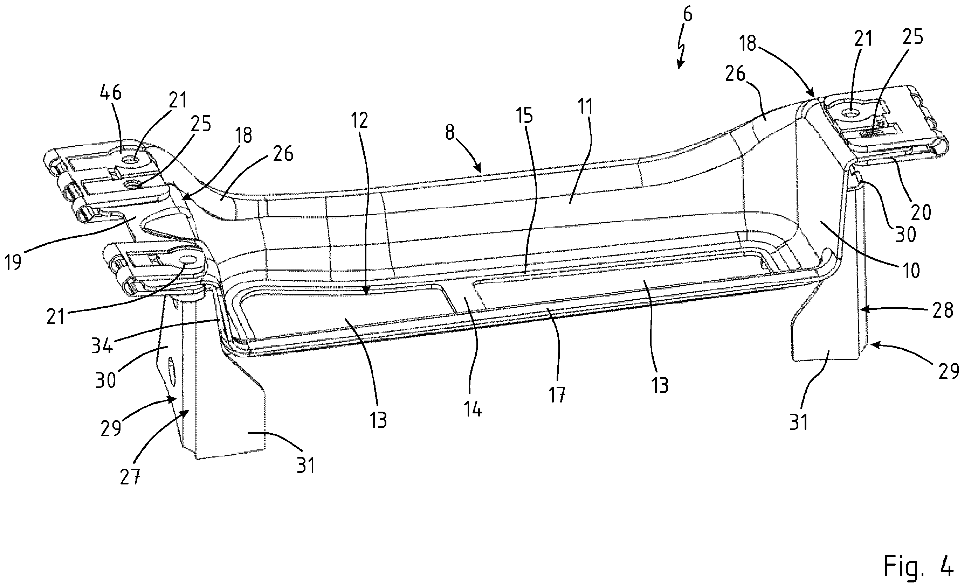

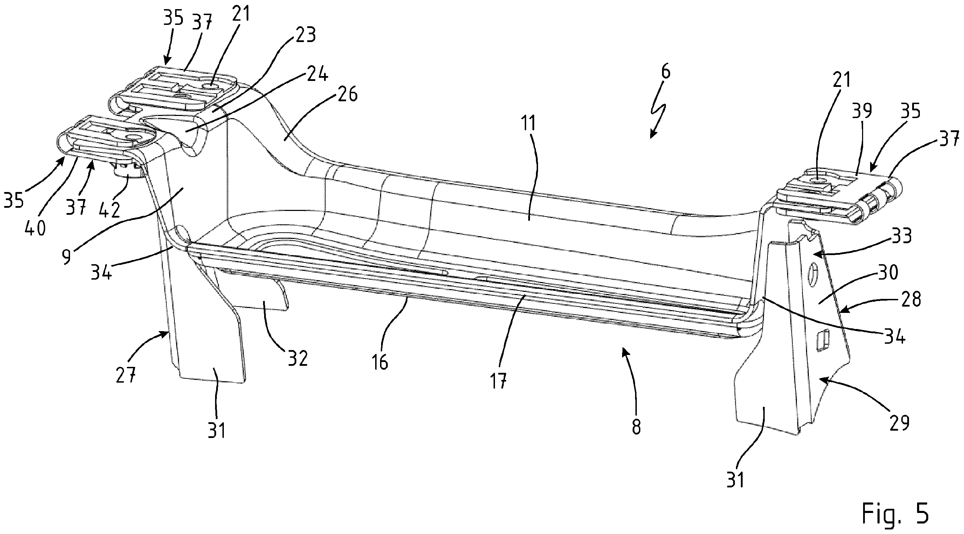

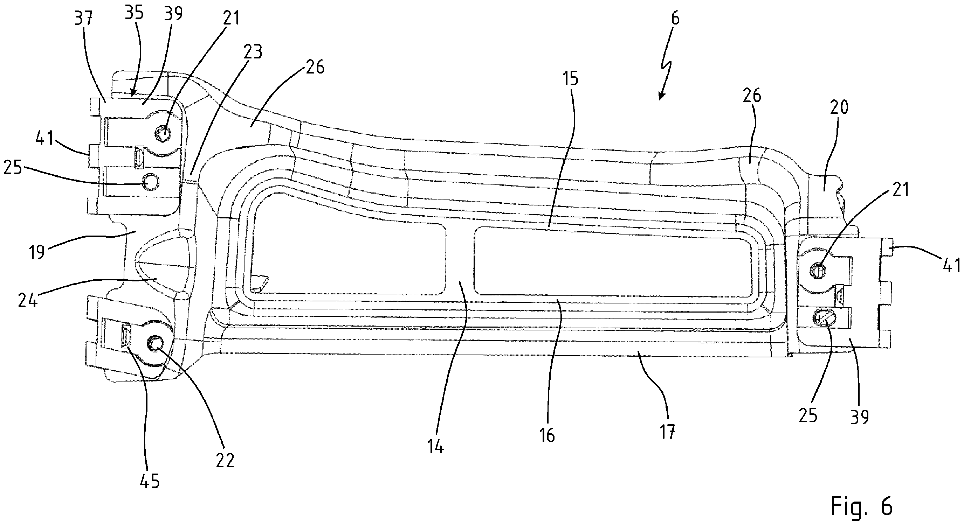

Die Figuren 4 bis 7 zeigen eine erste Ausführungsform einer Halterung 6.

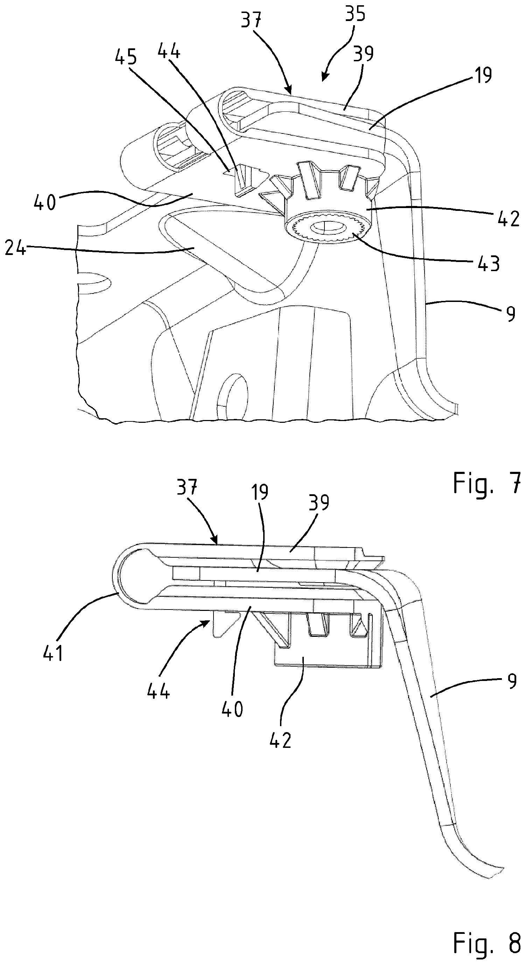

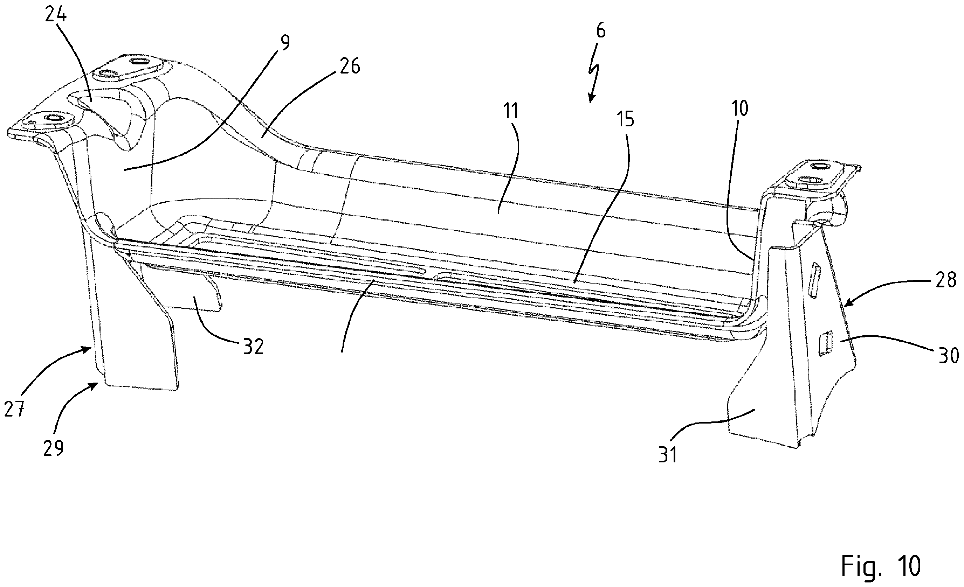

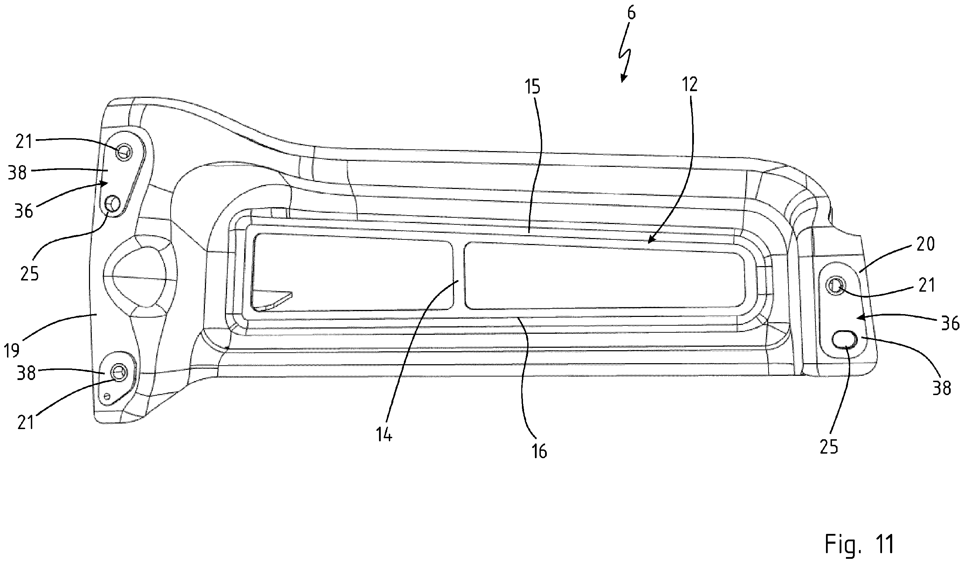

Anhand der Figuren 8 bis 11 ist eine zweite Ausführungsform einer Halterung 6 für ein Head-up-Display 7 beschrieben.

Eine Halterung 6 umfasst einen Tragkörper 8 für ein Head-up-Display 7. Der Tragkörper 8 ist bevorzugt wannenförmig konfiguriert. Der Tragkörper 8 weist zwei in y-Achse mit Abstand zueinander angeordnete Seitenwänden 9, 10 auf. Zwischen den Seitenwänden 9, 10 erstreckt sich eine hintere geschlossene Rückwand 11. Bodenseitig zwischen den Seitenwänden 9, 10 erstreckt sich ein Boden 12 des Tragkörpers 8. Der Boden 12 ist bereichsweise offen und weist Ausnehmungen 13 auf. Zwischen den im Ausführungsbeispiel zwei Ausnehmungen 13 des Tragkörpers 8 erstreckt verläuft eine Querstrebe 14. Die Querstrebe 14 erstreckt sich in x-Achse zwischen einer hinteren Bodenstrebe 15 und einer vorderen Bodenstrebe 16 jeweils über die Länge des Bodens 12 verlaufend. Vorderseitig ist der Tragkörper 8 offen. Die vordere Bodenstrebe 16 geht gerundet in eine nach vorne gerichtete Längswandstrebe 17 über. Die Längswandstrebe 17 erstreckt sich zwischen den Seitenwänden 9 und 10.

Der Tragkörper 8 weist an den oberen Enden 18 der Seitenwände 9, 10 in y-Achse jeweils nach außen gerichtete Flanschabschnitte 19, 20 auf. Die Flanschabschnitte 19, 20 erstrecken sich entlang der Seitenwände 9, 10. In den Flanschabschnitten 19, 20 sind Montageöffnungen 21, 22 vorgesehen. Die Montageöffnungen 21, 22 durchsetzen die Flanschabschnitte 19, 20 in z-Achse. Die Montageöffnungen 21, 22 dienen zur Befestigung des Head-up-Displays 7.

Der Flanschabschnitt 19 an der Seitenwand 9 ist länger als der Flanschabschnitt 20 an der gegenüberliegenden Seitenwand 10. Im mittleren Längenabschnitt ist im Übergang 23 von der Seitenwand 9 vom Flanschabschnitt 19 eine Sicke 24 vorgesehen. Die Sicke 24 ist von der Innenseite des Tragkörpers 8 nach außen geprägt und erstreckt sich in y-Achse bereichsweise über den Flanschabschnitt 19.

Benachbart zur in Bildebene hinteren Montageöffnung 21 in Flanschabschnitt 19 und benachbart zur Montageöffnung 21 im Flanschabschnitt 20 ist ein Positionierelement 25 in Form eines Lochs bzw. Langlochs vorgesehen.

Die Seitenwände 9, 10 sind in z-Achse länger als die Rückwand 11, so dass die Seitenwände 9, 10 höher sind als die Rückwand 11. Am rückwandseitigen Ende der Flanschabschnitte 19, 20 gehen diese jeweils von der Seitenwand 9 bzw. 10 über einen gekrümmt verlaufenden und sich verjüngenden Übergangsabschnitt 26 in die Rückwand 11 über.

Der Tragkörper 8 ist über Stützen 27, 28 am Querträger 2 festgelegt. Jede Stütze 27, 28 weist einen an die Außenkontur des Querträgers 2 konfigurativ angepassten Stützenfuß 29 auf. Die Stützen 27, 28 sind im horizontalen Querschnitt u-förmig konfiguriert mit einem Steg 30 und jeweils an dem Steg 30 in x-Achse umgestellten Schenkeln 31, 32. Der Säulenfuß 29 steht auf dem Außenumfang des Querträgers 2 auf und umgreift diesen bereichsweise. Jede Stütze 27, 28 ist im Querträger 2 verschweißt. Nach oben in Richtung zum freien bzw. tragkörperseitigen Ende 33 verjüngen sich die Stützen 27, 28. Die Schenkel 31, 32 sind im Bereich des Säulenfuß 29 länger ausgeführt als am tragkörperseitigen oberen Ende 33. Die Stützen 27, 28 weisen Anlageflächen 34 auf. An den Anlageflächen 34 einer Stütze 27, 28 liegt ein Tragkörper 8 mit seinen Seitenwände 9 bzw. 10 an und ist mit den Stützen 27, 28 gefügt. Beim Fügevorgang kann die Position des Tragkörpers 8 in z-Achse relativ zu den Stützen 27, 28 eingestellt werden. Durch Rotation um die y-Achse erfolgt eine Ausrichtung des Tragkörpers 8 im Kippwinkel. Die korrekte Position und Lage der Halterung 6 in y-Achse erfolgt über die Position der Stützen 27, 28 am Querträger 2.

Im Bereich einer Montageöffnung 21, 22 ist jeweils ein elektrisch nicht leitendes Koppelglied 35, 36 angeordnet. Ein Koppelglied 35, 36 deckt jeweils den zu einer Montageöffnung 21,22 einschließlich eines Positionierelements 25 benachbarten Bereich des Flanschabschnitts 19 bzw. 20 ober- und unterseitig ab. Ein Koppelglied 35, 36 deckt auch den inneren Umfang der Montageöffnung 21, 22 und das Loch bzw. die innere Lochwandung des Positionierelements 25 elektrisch isolierend ab. Abdecken bedeutet, dass das Koppelglied 35, 36 an den Flächen anliegt, diese beschichtet und das Koppelglied 35, 36 eine Montageöffnung 21, 22 auskleidet. Ein elektrisch nicht leitendes Koppelglied 35, 36 ist dafür ausgelegt und eingerichtet eine galvanische Trennung zwischen der Halterung 6 und dem Head-up-Display 7 zu bewirken.

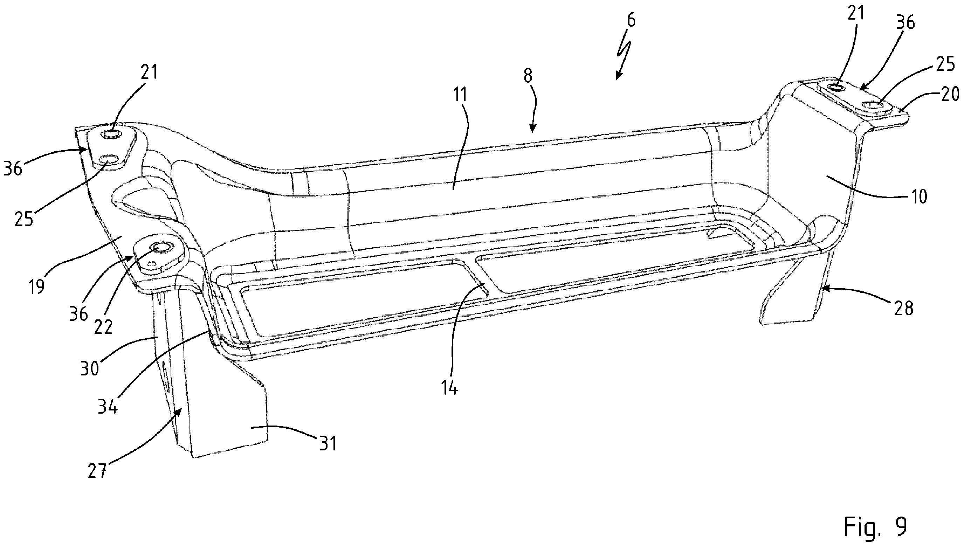

Die Halterung 6 wie anhand der Figuren 4 bis 8 beschrieben und die Halterung 6 wie anhand der Figuren 9 bis 13 beschrieben unterscheiden sich durch die Ausführung der Koppelglieder 35 bzw. 36.

Das Koppelglied 35 der Halterung 6 gemäß der Darstellungen der Figuren 4 bis 8 ist in Form eines Clips 37 ausgeführt.

Das Koppelglied 36 der Halterung 6 entsprechend der Darstellung der Figuren 9 bis 12 ist als Spritzteil 38 ausgeführt.

Ein Koppelglied 35 in der Ausgestaltung als Clip 37 besteht aus Kunststoff und weist einen oberen Klammerabschnitt 39 und einen unteren Klammerabschnitt 40 auf, die jeweils einen Flanschabschnitt 19, 20 umgreifen. An den vom Flanschabschnitt 19, 20 abgewandten Ende sind der obere Klammerabschnitt 39 und der untere Klammerabschnitt 40 durch Bügel 41 verbunden.

Am unteren Klammerabschnitt 40 erstreckt sich ein Stutzenkörper 42 abwärts. Der Stutzenkörper 42 weist eine Längsöffnung auf, welche die Fortsetzung einer Montageöffnung 21 bildet. Im Stutzenkörper 42 ist ein Schraubverbindungselement 43 in Form einer Gewindehülse integriert (siehe hierzu insbesondere Figuren 7 und 8).

Der Clip 37 weist Rastelemente 44 auf in Form eines Federschenkels, der eine Rastnase besitzt. Das Rastelement 44 durchgreift eine Öffnung 45 im Flanschabschnitt 19 und im unteren Klammerabschnitt 40 und rastet am unteren Klammerabschnitt widerlagernd ein.

Oberseitig besitzt das Koppelglied 35 in Form des Clips 37 eine Anlagefläche 46. Dort kann ein Montagelement, insbesondere ein Schraubbolzen, mit seinem Schraubkopf zur Anlage kommen. Die Anlagefläche 46 ist gegenüber der äußeren Oberseite des Koppelglieds 35 abgesetzt, d.h., abgesenkt bzw. vertieft. Die Anlagefläche 46 umschließt eine Montageöffnung 21, 22.

Die elektrisch nicht leitenden Koppelglieder 36 wie in den Figuren 9 bis 13 dargestellt sind als Spritzteil 38 aus Kunststoff hergestellt. Ein Koppelglied 36 ist im Bereich jeweils einer Montageöffnung 21, 22 ausgebildet und deckt die Bereiche des Flanschabschnittes 19, 20 ober- und unterseitig ab. Des Weiteren werden die innere Umfangswand der Montageöffnungen 21, 22 und das Loch des Positionierelements 25 vom aufgespritzten Werkstoff des elektrisch nicht leitenden Koppelglieds 36 abgedeckt bzw. beschichtet.

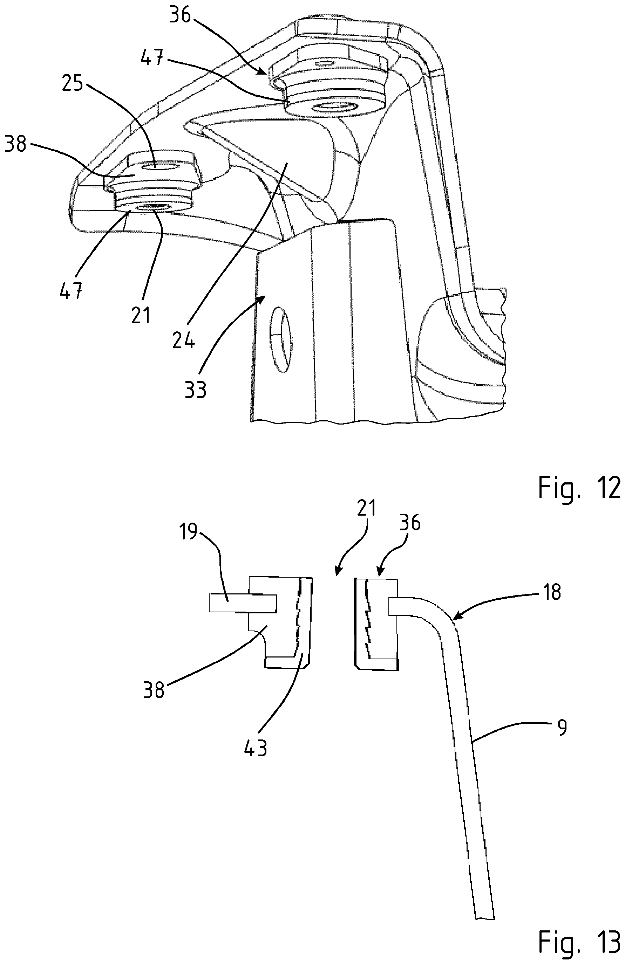

Auch im Koppelglied 36 ist ein Schraubverbindungselement 43 integriert. Hierzu ist am elektrisch nicht leitenden Koppelglied 36 ein Stutzenkörper 42 spritztechnisch hergestellt. Das Schraubverbindungselement 43 in Form einer Gewindehülse durchsetzt das Koppelglied 36 und bildet den Bestandteil der Montageöffnung 21 (siehe Figur 13).

Der Querträger 2 und die Halterung 6 bzw. deren Tragkörper 8 und die Stützen 27, 28 bestehen aus Stahl. Die elektrisch nicht leitenden Koppelglieder 35, 36 bestehen aus einem elektrisch nicht leitenden Werkstoff, insbesondere Kunststoff und sind so dimensioniert, dass eine galvanische Trennung zwischen den Bauteilen der Halterung 6 und einem montierten Head-up-Display 7 gewährleistet ist.

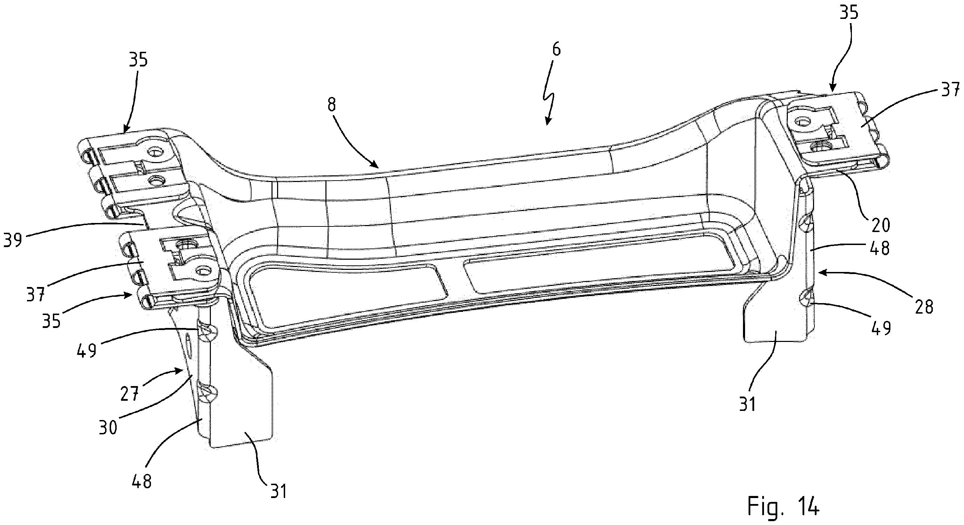

Die Figur 14 zeigt eine weitere Ausführungsform einer Halterung 6 für ein Head-up-Display 7. Die Halterung 6 entspricht im Wesentlichen der Halterung 6, wie anhand der Figuren 3 bis 6 beschrieben. Auf die dortige Beschreibung wird daher verwiesen. Der Tragkörper 8 ist über Stützen 27, 28 am Querträger 2 festgelegt. In den vertikal verlaufenden Kanten 48 am Übergang zwischen dem Steg 30 und einem Schenkel 31 sind sich quer über die Kante 48 erstreckende Sicken 49 vorgesehen. Die Sicken 49 versteifen die Stützen 27 und 28.

Die bei der Halterung 6 bzw. dem Tragkörper 8 zum Einsatz gelangenden Koppelglieder 35 sind in Form von Clips 37 ausgeführt, wobei an beiden Flanschabschnitten 19, 20 und den dortigen Montageöffnungen 21, 22 jeweils gleichartige Clips 37 zum Einsatz gelangen.

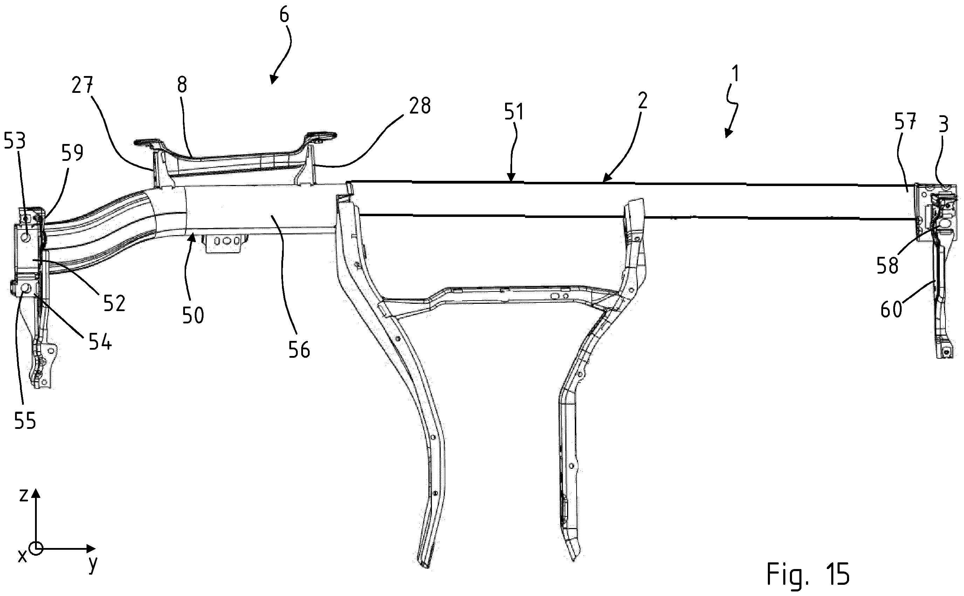

Die Figur 15 zeigt wiederum einen Instrumententafelträger 1. Der Instrumententafelträger 1 weist einen Querträger 2 auf. Der Querträger 2 ist zwischen hier nicht dargestellten A-Säulen einer Fahrzeugkarosserie eingliederbar und erstreckt sich im Wesentlichen horizontal verlaufend quer zwischen den A-Säulen.

Der Querträger 2 weist einen fahrerseitigen Längenabschnitt 50 und einen beifahrerseitigen Längenabschnitt 51 auf, die miteinander gekoppelt sind. Der beifahrerseitige Längenabschnitt 51 ist durch ein geradlinig verlaufendes Rohr gebildet. Der fahrerseitige Längenabschnitt 50 ist durch ein U-O-Formen eines Blechzuschnitts pressgeformt.

Das in Bildebene linke fahrerseitige Querträgerende 52 ist rechteckig konfiguriert und weist eine rohrintegrierte und das Querträgerende 52 durchsetzende Montageöffnung 53 auf. Über die Montageöffnung 53 und entsprechende Montageelemente erfolgt die Verschraubung des Querträgers 2 in Richtung der Fahrzeuglängsachse (x-Achse) an der Karosserie bzw. der A-Säule der Karosserie. Das Querträgerende 52 ist im vertikalen Querschnitt rechteckig konfiguriert und besitzt eine in Fahrzeughochachse (z-Achse) gemessene Höhe, die größer ist als die in Fahrzeuglängsachse (x-Achse) gemessene Breite.

Unter dem fahrerseitigen Querträgerende 52 ist zusätzlich ein angeschweißter Halter 54 mit einer Montageöffnung 55 vorgesehen. Auch die Montageöffnung 55 ist in Fahrzeuglängsachse (x-Achse) orientiert und dient zur Fixierung des Instrumententafelträgers 1 bzw. des Querträgers 2 mittelbar oder unmittelbar an der A-Säule der Fahrzeugkarosserie.

In Richtung zum beifahrerseitigen Längenabschnitt 51 geht der rechteckige Querschnitt in einen kreisförmigen Querschnitt über. Bei der pressformtechnischen Herstellung des fahrerseitigen Längenabschnitts 50 wird eine ebene Blechplatine zunächst im Querschnitt betrachtet U-förmig eingeformt und anschließend zum geschlossenen Rohr O-förmig bzw. rechteckig umgeformt. Der S-förmige Konturverlauf am Übergang vom rechteckigen zum runden Querschnitt ist durch die U-O-Formgebung ohne zusätzliche Biegeoperationen hergestellt.

An dem S-förmigen Übergang im fahrerseitigen Längenabschnitt 50 schließt sich ein gradlinig verlaufender Lenkerabschnitt 56 an. Oberhalb des Lenkerabschnitts 56 ist die Halterung 6 für ein Head-up-Display stoffschlüssig gefügt. Die Halterung 6 ist mit den Stützen 27, 28 auf dem Lenkerabschnitt 56 geschweißt.

Eine erste Tunnelstütze 5 zwischen dem fahrerseitigen Längenabschnitt 50 und dem beifahrerseitigen Längenabschnitt 51 sowie eine weitere Tunnelstütze 5 des beifahrerseitigen Längenabschnitts 51 des Querträgers 2 verbinden diese mit dem Fahrzeugboden oder einem Fahrzeugtunnel.

Am A-säulenseitigen Ende 57 des beifahrerseitigen Längenabschnitts 51 des Querträgers 2 ist ebenfalls ein Montagebauteil 3 vorgesehen. Dieses Montageelement 3 ist angeschweißt und weist Öffnungen 58 in der Fahrzeuglängsachse (x-Achse) zur Verschraubung an der Karosserie bzw. der dortigen A-Säule auf.

Optional können weitere Halterungen und Streben vorgesehen sein, beispielsweise für Klimaanlage, Lenksäulenbefestigung, Bedienelemente oder für das Armaturenbrett (Dashboard) selbst.

Man erkennt des Weiteren, dass das fahrerseitige Querträgerende 52 ein Halterbauteil 59 durchsetzt. Dieses dient zusammen mit einem Halterbauteil 60 auf der Beifahrerseite am dortigen Ende 57 zur Festlegung des Armaturenbretts.

### Bezugszeichen:

- 1 -: Instrumententafelträger
- 2 -: Querträger
- 3 -: Montagebauteile
- 4 -: Lenkerhalter
- 5 -: Stützstreben
- 6 -: Halterung
- 7 -: Head-up-Display
- 8 -: Tragkörper
- 9 -: Seitenwand
- 10 -: Seitenwand
- 11 -: Rückwand
- 12 -: Boden
- 13 -: Ausnehmungen
- 14 -: Querstrebe
- 15 -: hintere Bodenstrebe
- 16 -: vordere Bodenstrebe
- 17 -: Längswandstrebe
- 18 -: oberes Enden von 9, 10
- 19 -: Flanschabschnitt
- 20 -: Flanschabschnitt
- 21 -: Montageöffnung
- 22 -: Montageöffnung
- 23 -: Übergang
- 24 -: Sicke
- 25 -: Positionierelement
- 26 -: Übergangabschnitt
- 27 -: Stütze
- 28 -: Stütze
- 29 -: Stützenfuß
- 30 -: Steg
- 31 -: Schenkel
- 32 -: Schenkel
- 33 -: Ende
- 34 -: Anlagefläche
- 35 -: Koppelglied
- 36 -: Koppelglied
- 37 -: Clip
- 38 -: Spritzteil
- 39 -: Klammerabschnitt
- 40 -: Klammerabschnitt
- 41 -: Bügel
- 42 -: Stutzenkörper
- 43 -: Schraubverbindungselement
- 44 -: Rastelement
- 45 -: Öffnung
- 46 -: Anlagefläche
- 47 -: Stutzenkörper
- 48 -: Kante
- 49 -: Sicke
- 50 -: fahrerseitiger Längenabschnitt
- 51 -: beifahrerseitiger Längenabschnitt
- 52 -: Querträgerende
- 53 -: Montageöffnung
- 54-: Halter
- 55 -: Montageöffnung
- 56 -: Lenkerabschnitt
- 57 -: Ende von 51
- 58 -: Öffnung
- 59 -: Halterbauteil
- 60 -: Halterbauteil

## Patentansprüche

1. Instrumententafelträger für ein Kraftfahrzeug, der einen zwischen den A-Säulen einer Kraftfahrzeugkarosserie eingliederbaren Querträger (2) mit einer Halterung (6) für ein Head-up-Display aufweist, wobei die Halterung (6) einen Tragkörper (8) für das Head-up-Display (7) aufweist, wobei der Tragkörper (8) über Stützen (27, 28) am Querträger (2) festgelegt ist, **dadurch gekennzeichnet, dass** der Tragkörper (8) Flanschabschnitte (19, 20) mit Montageöffnungen (21, 22) zur Befestigung des Head-up-Displays besitzt, wobei im Bereich einer Montageöffnung (21, 22) ein elektrisch nicht leitendes Koppelglied (35, 36) vorgesehen ist.

2. Instrumententafelträger nach Anspruch 1, **dadurch gekennzeichnet, dass** eine Stütze (27, 28) Schenkel (31, 32) mit Anlageflächen (34) für den Tragkörper (8) aufweist.

3. Instrumententafelträger nach Anspruch 1 oder 2, **dadurch gekennzeichnet, dass** ein Koppelglied (35, 36) einen Flanschabschnitt (19, 20) oberseitig und/oder unterseitig zumindest bereichsweise abdeckt und/oder die Montageöffnung (21, 22) innenseitig abdeckt.

4. Instrumententafelträger nach einem der Ansprüche 1 bis 3, **dadurch gekennzeichnet, dass** das Koppelglied (35, 36) ein Schraubverbindungselement (43) aufweist.

5. Instrumententafelträger nach Anspruch 4, **dadurch gekennzeichnet, dass** das Koppelglied (35, 36) unterseitig in Fortsetzung einer Montageöffnung (21) einen Stutzenkörper (42, 47) aufweist, in welchem das Schraubverbindungselement (43) angeordnet ist.

6. Instrumententafelträger nach einem der Ansprüche 1 bis 5, **dadurch gekennzeichnet, dass** das Koppelglied (35) in Form eines Clips (37) ausgeführt ist.

7. Instrumententafelträger nach einem der Ansprüche 1 bis 5, **dadurch gekennzeichnet, dass** das Koppelglied (36) als Spritzteil (38) ausgeführt ist.

8. Instrumententafelträger nach einem der Ansprüche 1 bis 7, **dadurch gekennzeichnet, dass** der Tragkörper (8) zwei in Längsrichtung (y-Achse) des Querträgers (2) axial mit Abstand zueinander angeordnete sich in x-Achse erstreckende Seitenwände (9, 10) aufweist, zwischen denen sich Längswände, Längswandstreben (17) und/oder bodenseitig ein Boden (12) oder Bodenstreben (15, 16) erstrecken.

9. Instrumententafelträger nach Anspruch 8, **dadurch gekennzeichnet, dass** die Seitenwände (9, 10) untereinander biegesteif verbunden sind.

10. Instrumententafelträger nach einem der Ansprüche 1 bis 9, **dadurch gekennzeichnet, dass** jede Stütze (27, 28) einen an die Außenkontur des Querträgers (2) konfigurativ angepassten Stützenfuß (29) aufweist, welcher den Querträger (2) bereichsweise umgreift und mit dem Querträger (2) stoffschlüssig gefügt ist.

11. Instrumententafelträger nach einem der Ansprüche 8 bis 10, **dadurch gekennzeichnet, dass** jeweils ein Flanschabschnitt (19, 20) sich am oberen Ende jeweils einer Seitenwand (9, 10) nach außen gerichtet erstreckt.

12. Instrumententafelträger nach einem der Ansprüche 1 bis 11, **dadurch gekennzeichnet, dass** der Tragkörper (8) bodenseitig bereichsweise offen ausgeführt ist, insbesondere einen Boden (12) aufweist mit Ausnehmungen (13) und/oder Durchzügen und/oder Öffnungen, wobei eine Öffnung einen randseitig umlaufenden Kragen oder randseitige Kragenabschnitte aufweist.

13. Instrumententafelträger nach einem der Ansprüche 1 bis 12, **dadurch gekennzeichnet, dass** das Koppelglied (35, 36) oberseitig eine Anlagefläche für ein Montageelement aufweist, wobei die Anlagefläche (46) gegenüber der äußeren Oberseite des Koppelglieds (35, 36) abgesetzt, insbesondere vertieft ist und eine Montageöffnung (21, 22) umschließt.

14. Instrumententafelträger nach einem der Ansprüche 1 bis 13, **dadurch gekennzeichnet, dass** benachbart zu mindestens einer Montageöffnung (21, 22) ein Positionierelement (25) für das Head-up-Display angeordnet ist.

15. Instrumententafelträger nach einem der Ansprüche 1 bis 14, **dadurch gekennzeichnet, dass** der Querträger (2) einen fahrerseitigen Längenabschnitt (50) mit einem Querträgerende (52) aufweist, wobei das Querträgerende (52) eine Montageöffnung (53) aufweist, welche den fahrerseitigen Längenabschnitt (50) in Fahrzeuglängsachse (x-Achse) durchsetzt.

16. Instrumententafelträger nach Anspruch 15, **dadurch gekennzeichnet, dass** das Querträgerende (52) rechteckig konfiguriert ist und in Fahrzeughochachse (z-Achse) eine größere Höhe besitzt als die in Fahrzeuglängsachse (x-Achse) gemessene Breite.

17. Instrumententafelträgeranordnung mit einem Instrumententafelträger (1) nach einem der Ansprüche 1 bis 16 sowie einem an der Halterung (6) montiertem Head-up-Display.

18. Verfahren zur Herstellung einer Instrumententafelträgeranordnung nach Anspruch 17, **gekennzeichnet durch** folgende Schritte:
- Bereitstellen eines metallischen Querträgers (2), der dazu bestimmt und ausgelegt ist, zwischen den A-Säulen einer Kraftfahrzeugkarosserie eingegliedert zu werden;
- schweißtechnische Fügung einer Mehrzahl von metallischen Halterbauteilen am Querträger (2), wobei zumindest zwei metallische Stützen (27, 28) am Querträger (2) festgelegt werden, welche dafür ausgelegt und bestimmt sind, mit einem Tragkörper (8) für ein Head-up-Display (7) gekoppelt zu werden;
- Bereitstellen eines Tragkörpers (8) für ein Head-up-Display (7), welcher zwei mit Abstand zueinander angeordnete Seitenwände (9, 10) aufweist, die untereinander biegesteif verbunden sind;
- Positionieren des Tragkörpers (8) relativ zu den Stützen (27, 28) und Ausrichten des Tragkörpers (8) relativ zu den Stützen (27, 28) in z-x-Ebene;
- Schweißtechnische Fügung des Tragkörpers (8) zwischen den Stützen (27, 28);
- Bereitstellen und Montage eines Head-up-Displays (7) in der Halterung (6).

## Claims

1. Instrument panel support for a motor vehicle, which has a cross-member (2) which can be incorporated between the A-pillars of a motor vehicle body and has a holder (6) for a head-up display, wherein the holder (6) has a support body (8) for the head-up display (7), wherein the support body (8) is fixed to the cross-member (2) via supports (27, 28), **characterized in that** the support body (8) has flange sections (19, 20) with mounting openings (21, 22) for fixing the head-up display, wherein an electrically non-conductive coupling member (35, 36) is provided in the region of a mounting opening (21, 22).

2. Instrument panel support according to claim 1, **characterized in that** a support (27, 28) has legs (31, 32) with bearing surfaces (34) for the support body (8).

3. Instrument panel support according to claim 1 or 2, **characterized in that** a coupling member (35, 36) covers a flange section (19, 20) on the top and/or bottom side at least in certain areas and/or covers the mounting opening (21, 22) on the inside.

4. Instrument panel support according to any one of claims 1 to 3, **characterized in that** the coupling member (35, 36) has a screw connecting element (43).

5. Instrument panel support according to claim 4, **characterized in that** the coupling member (35, 36) has a connecting piece body (42, 47) on the bottom side in continuation of a mounting opening (21), in which connecting piece body the screw connecting element (43) is arranged.

6. Instrument panel support according to any one of claims 1 to 5, **characterized in that** the coupling member (35) is configured in the form of a clip (37).

7. Instrument panel support according to any one of claims 1 to 5, **characterized in that** the coupling member (36) is configured as an injection moulded part (38).

8. Instrument panel support according to any one of claims 1 to 7, **characterized in that** the support body (8) has two side walls (9, 10) extending in the x-axis which are arranged axially at a distance from one another in the longitudinal direction (y-axis) of the cross-member (2), between which longitudinal walls, longitudinal wall struts (17) and/or, on the base side, a base (12) or base struts (15, 16) extend.

9. Instrument panel support according to claim 8, **characterized in that** the side walls (9, 10) are connected to one another in a flexurally rigid manner.

10. Instrument panel support according to any one of claims 1 to 9, **characterized in that** each support (27, 28) has a support foot (29) which is adapted configurationally to the outer contour of the cross-member (2), engages around the cross-member (2) in certain areas and is joined to the cross-member (2) in a material-bonded manner.

11. Instrument panel support according to any one of claims 8 to 10, **characterized in that** a flange section (19, 20) extends outwards at the upper end of a respective side wall (9, 10).

12. Instrument panel support according to any one of claims 1 to 11, **characterized in that** the support body (8) is configured to be open in certain areas on the base side, in particular has a base (12), with recesses (13) and/or throughputs and/or openings, wherein one opening has a collar surrounding the edge or edge-side collar sections.

13. Instrument panel support according to any one of claims 1 to 12, **characterized in that** the coupling member (35, 36) has a bearing surface for a mounting element on the top side, wherein the bearing surface (46) is offset, in particular recessed, with respect to the outer upper side of the coupling member (35, 36) and encloses a mounting opening (21, 22).

14. Instrument panel support according to any one of claims 1 to 13, **characterized in that** a positioning element (25) for the head-up display is arranged adjacent to at least one mounting opening (21, 22).

15. Instrument panel support according to any one of claims 1 to 14, **characterized in that** the cross-member (2) has a driver-side longitudinal section (50) with a cross-member end (52), wherein the cross-member end (52) has a mounting opening (53), which passes through the driver-side longitudinal section (50) in the longitudinal axis (x-axis) of the vehicle.

16. Instrument panel support according to claim 15, **characterised in that** the cross-member end (52) is configured to be rectangular and is higher in the vertical axis (z-axis) of the vehicle than the width measured in the longitudinal axis (x-axis) of the vehicle.

17. Instrument panel support arrangement with an instrument panel support (1) according to any one of claims 1 to 16 and a head-up display mounted on the holder (6).

18. Method for producing an instrument panel support arrangement according to claim 17, **characterized by** the following steps:
- providing a metal cross-member (2), which is intended and configured to be incorporated between the A-pillars of a motor vehicle body;
- joining a plurality of metal holder components to the cross-member (2) by welding, wherein at least two metal supports (27, 28) are fixed to the cross-member (2), which are configured and intended to be coupled to a support body (8) for a head-up display (7);
- providing a support body (8) for a head-up display (7), which has two side walls (9, 10) arranged at a distance from one another and connected to one another in a flexurally rigid manner;
- positioning the support body (8) relative to the supports (27, 28) and aligning the support body (8) relative to the supports (27, 28) in the z-x plane;
- welding the support body (8) between the supports (27, 28);
- providing and mounting a head-up display (7) in the holder (6).

## Revendications

1. Support de tableau de bord pour un véhicule automobile qui présente une traverse (2) incorporable entre les montants A d'une carrosserie de véhicule automobile avec un réceptacle (6) pour un affichage tête haute, dans lequel le réceptacle (6) présente un corps porteur (8) pour l'affichage tête haute (7), dans lequel le corps porteur (8) est fixé par le biais d'appuis (27, 28) au niveau de la traverse, **caractérisé en ce que** le corps porteur (8) possède des sections de bride (19, 20) avec des ouvertures de montage (21, 22) pour la fixation de l'affichage tête haute, dans lequel un organe de couplage (35, 36) non électroconducteur est prévu dans la zone d'une ouverture de montage (21, 22).

2. Support de tableau de bord selon la revendication 1, **caractérisé en ce qu'**un appui (27, 28) présente des branches (31, 32) avec des surfaces d'appui (34) pour le corps porteur (8).

3. Support de tableau de bord selon la revendication 1 ou 2, **caractérisé en ce qu'**un organe de couplage (35, 36) recouvre une section de bride (19, 20) au moins par endroits sur le côté supérieur et/ou le côté inférieur et/ou recouvre l'ouverture de montage (21, 22) sur le côté intérieur.

4. Support de tableau de bord selon l'une quelconque des revendications 1 à 3, **caractérisé en ce que** l'organe de couplage (35, 36) présente un élément de liaison vissée (43).

5. Support de tableau de bord selon la revendication 4, **caractérisé en ce que** l'organe de couplage (35, 36) présente un corps d'appui (42, 47) du côté inférieur dans la continuité d'une ouverture de montage (21), corps dans lequel l'élément de liaison vissée (43) est agencé.

6. Support de tableau de bord selon l'une quelconque des revendications 1 à 5, **caractérisé en ce que** l'organe de couplage (35) est réalisé sous la forme d'un clip (37).

7. Support de tableau de bord selon l'une quelconque des revendications 1 à 5, **caractérisé en ce que** l'organe de couplage (36) est réalisé comme une pièce moulée par injection (38).

8. Support de tableau de bord selon l'une quelconque des revendications 1 à 7, **caractérisé en ce que** le corps porteur (8) présente deux parois latérales (9, 10) s'étendant dans l'axe x, agencées à distance axialement l'une de l'autre dans le sens longitudinal (axe y) de la traverse (2), entre lesquelles s'étendent des parois longitudinales, des entretoises de paroi longitudinale (17) et/ou, du côté plancher, un plancher (12) ou des entretoises de plancher (15, 16).

9. Support de tableau de bord selon la revendication 8, **caractérisé en ce que** les parois latérales (9, 10) sont reliées de manière rigide en flexion entre elles.

10. Support de tableau de bord selon l'une quelconque des revendications 1 à 9, **caractérisé en ce que** chaque appui (27, 28) présente un pied d'appui (29) adapté en configuration au contour extérieur de la traverse (2), pied qui entoure par endroits la traverse (2) et est joint par complémentarité de matière à la traverse (2).

11. Support de tableau de bord selon l'une quelconque des revendications 8 à 10, **caractérisé en ce que** respectivement une section de bride (19, 20) s'étend dirigée vers l'extérieur au niveau de l'extrémité supérieure respectivement d'une paroi latérale (9, 10).

12. Support de tableau de bord selon l'une quelconque des revendications 1 à 11, **caractérisé en ce que** le corps porteur (8) est réalisé ouvert par endroits du côté plancher, en particulier présente un plancher (12) avec des évidements (13) et/ou des passages et/ou des ouvertures, dans lequel une ouverture présente un collet qui entoure le bord ou des sections de collet du côté bord.

13. Support de tableau de bord selon l'une quelconque des revendications 1 à 12, **caractérisé en ce que** l'organe de couplage (35, 36) présente du côté supérieur une surface d'appui pour un élément de montage, dans lequel la surface d'appui (46) est décalée, en particulier évidée, par rapport au côté supérieur extérieur de l'organe de couplage (35, 36), et entoure une ouverture de montage (21, 22).

14. Support de tableau de bord selon l'une quelconque des revendications 1 à 13, **caractérisé en ce qu'**un élément de positionnement (25) pour l'affichage tête haute est agencé de manière contiguë à au moins une ouverture de montage (21, 22).

15. Support de tableau de bord selon l'une quelconque des revendications 1 à 14, **caractérisé en ce que** la traverse (2) présente une section longitudinale (50) du côté conducteur avec une extrémité de traverse (52), dans lequel l'extrémité de traverse (52) présente une ouverture de montage (53) qui traverse la section longitudinale (50) du côté conducteur dans l'axe longitudinal du véhicule (axe x).

16. Support de tableau de bord selon la revendication 15, **caractérisé en ce que** l'extrémité de traverse (52) est configurée de manière rectangulaire et possède dans l'axe vertical du véhicule (axe z) une hauteur supérieure à la largeur mesurée dans l'axe longitudinal du véhicule (axe x).

17. Agencement de support de tableau de bord avec un support de tableau de bord (1) selon l'une quelconque des revendications 1 à 16 ainsi qu'un affichage tête haute monté sur le réceptacle (6).

18. Procédé de fabrication d'un agencement de support de tableau de bord selon la revendication 17, **caractérisé par** les étapes suivantes :
- la fourniture d'une traverse métallique (2) qui est destinée et conçue afin d'être incorporée entre les montants A d'une carrosserie de véhicule automobile ;
- la jonction par soudage d'une pluralité de composants de support métalliques au niveau de la traverse (2), dans lequel au moins deux appuis (27, 28) métalliques sont fixés au niveau de la traverse (2), appuis qui sont conçus et destinés à être couplés à un corps porteur (8) pour un affichage tête haute (7) ;
- la fourniture d'un corps porteur (8) pour un affichage tête haute (7) qui présente deux parois latérales (9, 10) agencées à distance l'une de à l'autre qui sont reliées entre elles de manière rigide à la flexion ;
- le positionnement du corps porteur (8) par rapport aux appuis (27, 28) et l'orientation du corps porteur (8) par rapport aux appuis (27, 28) dans le plan z-x ;
- la jonction par soudure du corps porteur (8) entre les appuis (27, 28) ;
- la fourniture et le montage d'un affichage tête haute (7) dans le réceptacle (6).
